# EUROPEAN PATENT SPECIFICATION

(11) **EP 1 839 992 B1**
(45) Date of publication and mention of the grant of the patent: **15.12.2010**
(21) Application number: 07004348.4
(22) Date of filing: 02.03.2007
(51) Int. Cl.: B62B 13/04, B62B 13/18, B62K 3/00

(54) **Skiing implement having a simplified structure**
Skigerät mit vereinfachter Struktur
Matériel de ski à structure simplifiée

(30) Priority: 31.03.2006 IT MI20060638
(43) Date of publication of application: 03.10.2007
(73) Proprietor: Paganoni, Giampietro, 24020 Fiorano al Serio (BG) (IT)
(72) Inventor: Paganoni, Giampietro, 24020 Fiorano al Serio (BG) (IT)
(74) Representative: Trupiano, Federica

(56) References cited:
- WO-A-03/106241
- CA-A- 1 003 464
- DE-U1- 20 020 978
- FR-A- 2 831 127
- US-A- 1 663 060
- US-A- 4 027 891
- US-A1- 2003 222 419
- US-B1- 6 626 441

## Description

The present invention relates to a skiing implement having a simplified structure.

As is known, several types of implements which allow to ski are already commercially available.

Among these types of implements, there is already a frame which can be likened to a bicycle frame, has two very short skis instead of the wheels and is provided with an additional pair of skis which are locked to the feet of the rider.

The skis allow to steer the implement effectively while sitting.

This type of implement, besides being excessively bulky and heavy, is not safe, since it provides a stable connection to the user with the possibility of damage in case of falls or the like,

Document US 2003/0222419 discloses a ski vehicle according to the preamble of claim 1 comprising a frame with a steering handlebar and a rear and a front skis which are respectively connected, in a oscillating manner, to two forks by means of two brackets. The ski vehicle further comprises a saddle, two foot platforms, and a shock absorber means both for the rear and the front ski.

Document FR 2831127, discloses a skiing implement having a rear and a front skis and a central frame on which is rotatably mounted a steering column. The skiing implement further comprises a shock absorber means and a braking system.

These implements have the drawback of being hardly steered especially when a sequence of curves, or rapid changes of direction, are performed.

The aim of the invention is to solve the problems described above by providing a skiing implement having a simplified structure, which allows to have absolute safety, since the legs and arms are not anchored to the implement and convenient apres-ski or walking boots are sufficient for use.

The implement can be used easily even by people who are not particularly expert, since the setup for use is practically imposed by the implement proper.

Within this aim, an object of the invention is to provide an implement which can be steered easily like a conventional bicycle and furthermore, if required, can be converted so that it can be used both on snow and on lawns.

Another object of the present invention is to provide an implement which thanks to its particular constructive characteristics is capable of giving the greatest assurances of reliability and safety in use.

Still another object of the present invention is to provide an implement which can be obtained easily starting from commonly commercially available elements and materials and is also competitive from a merely economical standpoint.

This aim and these and other objects, which will become better apparent hereinafter, are achieved by a skiing implement having a simplified structure, according to claim 1.

Further characteristics and advantages will become better apparent from the description of a preferred but not exclusive embodiment of a skiing implement having a simplified structure, illustrated by way of non-limiting example in the accompanying drawings, wherein:

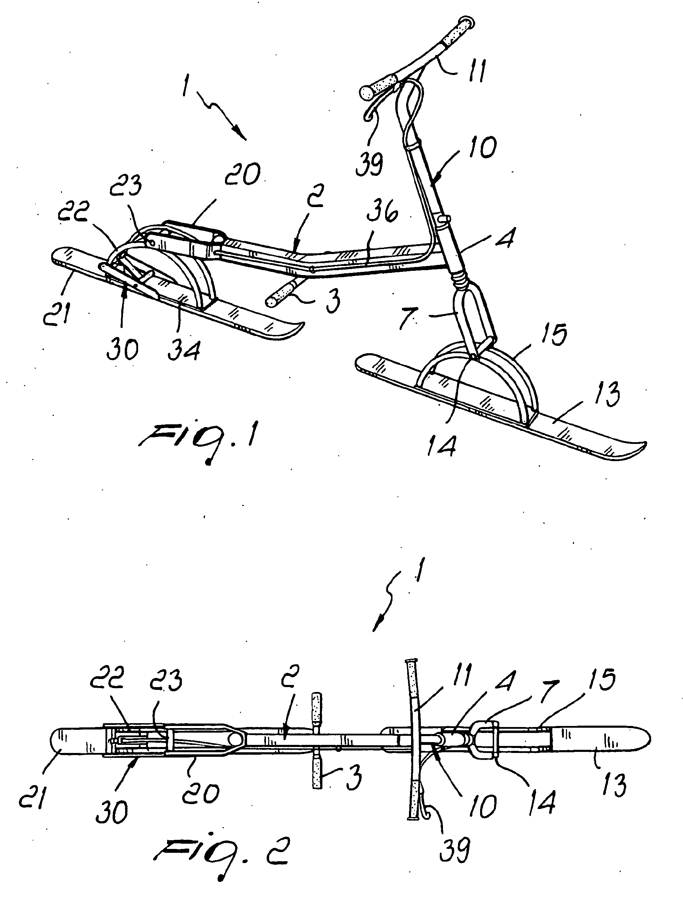

Figure 1 is a perspective view of the implement according to the invention;
Figure 2 is a top plan view of the implement;

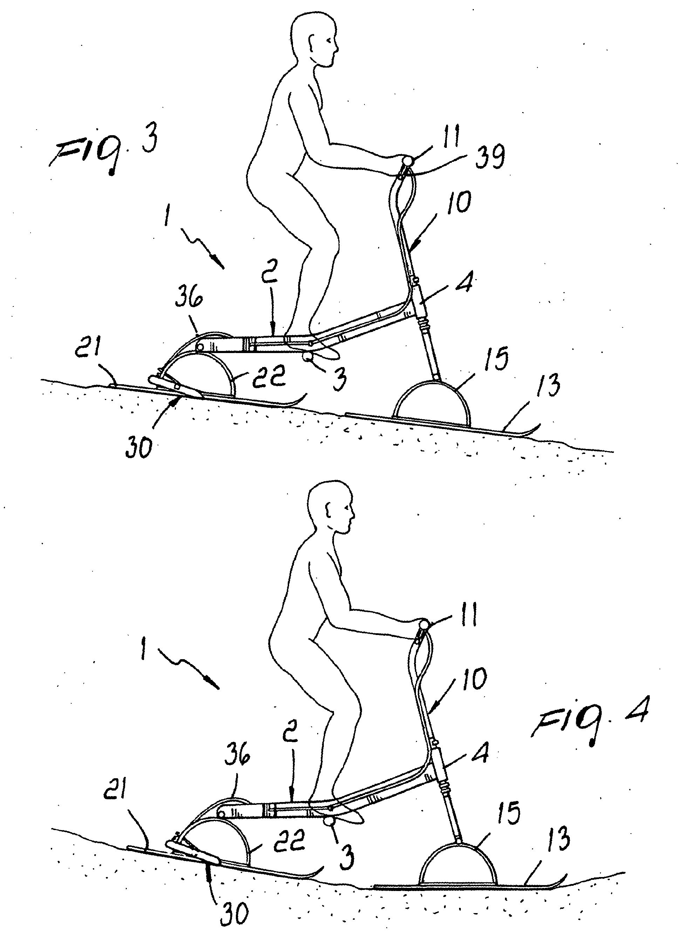

Figures 3 and 4 are schematic views of the implement during use;

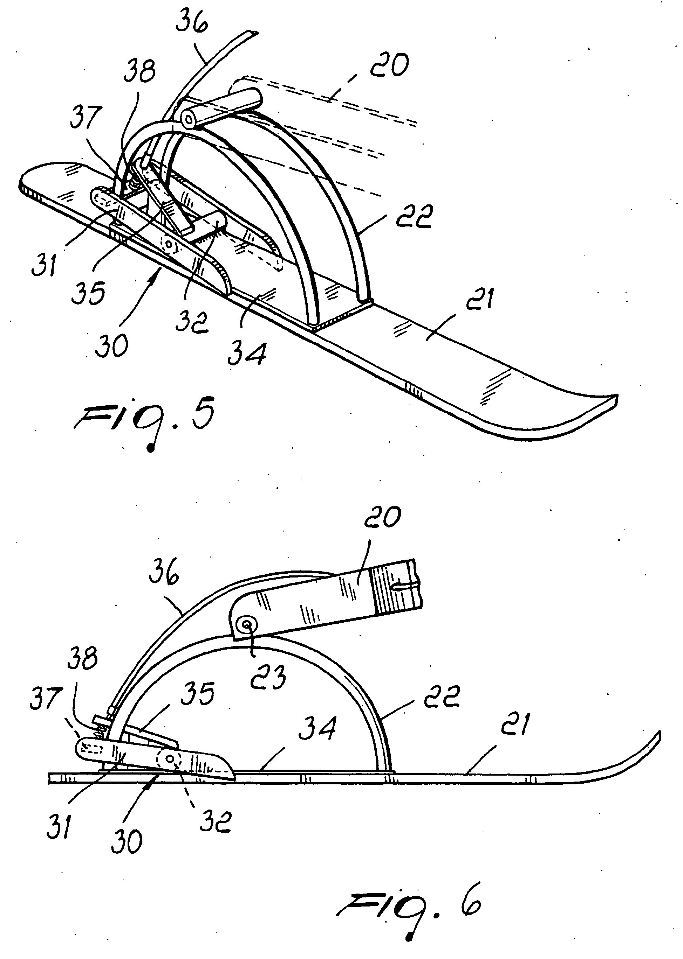

Figure 5 is a perspective view of a detail of a rear brake;
Figure 6 is a side elevation view of the brake;

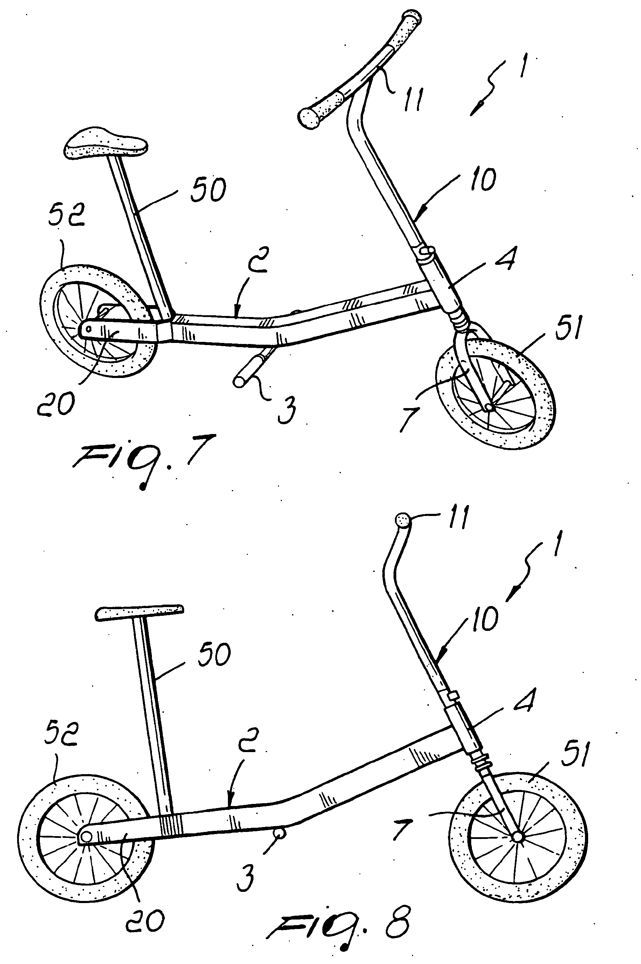

Figure 7 is a perspective view of the implement converted for its use on lawns and the like;
Figure 8 is a side elevation view of the converted implement.

With reference to the figures, the skiing implement having a simplified structure according to the invention, generally designated by the reference numeral 1, comprises an elongated frame 2, which is constituted advantageously by a tubular body having a suitable cross-section, which in a central portion defines supports 3 for the feet of the user, said supports protruding transversely with respect to the frame 2.

The frame 2 is connected, at the front end, to a head tube 4 which advantageously is inclined by approximately 15-20° with respect to the vertical, and for this purpose the frame, in its front portion, is preferably inclined upwardly and sized and structured so as to keep the center of gravity low during use.

A steering column 10 engages rotatably at the head tube or sleeve 4 and has a handlebar 11 in an upward region and is pivoted in a downward region to a front ski 13 by means of a front pivot 14, which is arranged substantially horizontally and is articulated to a front bracket 15 which is fixed to the ski.

At the rear end, the frame 2 has advantageously a rear fork 20, which is articulated to a rear ski 21 provided with a rear bracket 22, which is connected to the fork 20 by means of a rear pivot 23.

With this structure it is possible to handle turns adequately by shifting the weight of the skier on the downhill ski, which, as shown schematically in the figures, can bend so as to allow to set up the turn.

Advantageously, the ski can have a central sidecut, so that together with the lamina of the ski it is possible to have a grip which is sufficient to trace a number of consecutive turns on the snow.

In order to increase safety in use, it is possible to provide a rear brake, generally designated by the reference numeral 30, provided by means of oscillating brake levers 31 which are pivoted so that they can oscillate about a transverse direction with respect to the rear ski 21 in a bush 32 which is rigidly coupled to the plate 34 for connecting the rear bracket 22.

A fixed lever 35 is associated with the bush 32 and acts as abutment for the sheath of a cable 36, advantageously of the Bowden type, which is connected to a crossmember 37 which joins the two brake levers 31.

Elastic means 38 act between the fixed lever 35 and the crossmember 37 and are designed to keep the brake levers in a raised position, while actuation by means of the brake lever 39 arranged on the handlebar overcomes the elastic contrast of the spring 38, turning the brake levers 31, with consequent engagement with the snow.

In this manner it is possible to apply a braking action which allows particularly safe use.

Moreover, a peculiar feature of the invention consists in that the implement can be easily converted for use for example on lawns and the like, and for this purpose, it is possible to provide a saddle 50, which can be fixed to the frame, and to apply, instead of the front and rear skis, a front wheel 51 and a rear wheel 52, which engage respectively the rear fork 20 and, instead of the front ski, the front fork 7 provided at the lower end of the steering column.

In this case also, it is possible to use the cable to connect it optionally to a suitable rear brake.

From what has been described above it is therefore evident that the invention achieves the proposed aim and objects and in particular the fact is stressed that a combination of elements is provided which, due to the particular angle of the head tube of the steering system, combined with the skis articulated by means of two brackets which are articulated to the frame, allows to achieve an implement which is maneuverable and easy to use.

It is further possible to provide optionally a shock absorber which is interposed on the steering column thereby making use more comfortable.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A skiing implement (1) having a simplified structure, comprising an elongated frame (2) which forms, in a central portion, supports (3) for the feet of a user and at the front end, head tube (4) for rotary engagement with a steering column (10), a front ski (13) connected to the lower end of said column (10) and a rear ski (21) connected to the rear end of said frame (2) being further provided, said skis being connected so that they can oscillate about substantially horizontal axes, **characterized in that** said supports (3) for the feet of the user are arranged in a central position with respect to the longitudinal extension of said frame (2), said head tube (4) is inclined at an angle of 15-20° with respect to the vertical, and **in that** said frame (2) has a low center of gravity.

2. The skiing implement according to claim 1, **characterized in that** it comprises a handlebar which is connected to the upper end of said column.

3. The skiing implement according to one or more of the preceding claims, **characterized in that** it comprises, at said front ski, a front bracket which is articulated to said column by means of a front pivot.

4. The skiing implement according to one or more of the preceding claims, **characterized in that** it comprises, at the rear end of said frame, a rear fork for the articulation of said rear ski.

5. The skiing implement according to one or more of the preceding claims, **characterized in that** it comprises a rear bracket which is associated with said rear ski and is connected by means of a rear pivot to said rear fork.

6. The skiing implement according to one or more of the preceding claims, **characterized in that** said skis have a central sidecut.

7. The skiing implement according to one or more of the preceding claims, **characterized in that** it comprises a braking element at said rear ski.

8. The skiing implement according to claim 7, **characterized in that** said braking element comprises two oscillating brakes which are pivoted at a bush which is rigidly coupled to a plate for the connection of said rear bracket, a fixed abutment lever for the sheath of a cable associated with a brake lever arranged on the handlebar being rigidly coupled to said bush, a crossmember being further provided which joins said brake levers, elastic means acting between said abutment lever and said crossmember and being adapted to keep said brake levers in a raised position.

9. The skiing implement according to one or more of the preceding claims, **characterized in that** it comprises a saddle which can be coupled detachably to said frame.

10. The skiing implement according to one or more of the preceding claims, **characterized in that** it comprises a front wheel and a rear wheel, which can be positioned so as to replace said front and rear skis

11. The skiing implement according to one or more of the preceding claims, **characterized in that** it comprises a shock absorber which is interposed on said steering column.

## Patentansprüche

1. Skigerät (1) mit einer vereinfachten Struktur, umfassend:
einen gestreckten Rahmen (2), welcher in einer mittleren Position Auflagen für die Füße eines Benutzers und am vorderen Ende ein Steuerrohr (4) zum drehbaren Eingriff mit einer Lenksäule (10) ausbildet,
einen mit dem unteren Ende der Lenksäule (10) verbunden Vorderski (13) und
einen mit dem hinteren Ende des Rahmens (2) verbundenen Hinterski (21), weiterhin bereitstellend, dass die Skier so verbunden sind, dass sie um im Wesentlichen horizontale Achsen schwingen können,
**dadurch gekennzeichnet, dass**
die Auflagen (3) für die Füße des Benutzers in einer mittleren Position in Bezug auf die Längserstreckung des Rahmens (2) angeordnet sind,
dass das Steuerrohr (4) in einem Winkel von 15 bis 20° in Bezug auf die Vertikale geneigt ist, und **dadurch**,
dass der Rahmen (2) einen niedrigen Schwerpunkt aufweist.

2. Skigerät nach Anspruch 1, **dadurch gekennzeichnet, dass** es einen Lenker umfasst, welcher mit dem oberen Ende der Lenksäule verbunden ist.

3. Skigerät nach einem oder mehreren der vorhergehenden Ansprüche, **dadurch gekennzeichnet, dass** es am Vorderski einen Befestigungsarm umfasst, welcher mittels eines vorderen Drehpunkts gelenkig mit der Lenksäule verbunden ist.

4. Skigerät nach einem oder mehreren der vorhergehenden Ansprüche, **dadurch gekennzeichnet, dass** es am hinteren Ende des Rahmens eine hintere Gabel umfasst, um den hinteren Ski gelenkig zu lagern.

5. Skigerät nach einem oder mehreren der vorhergehenden Ansprüche, **dadurch gekennzeichnet, dass** es einen hinteren Befestigungsarm umfasst, welcher mit dem Hinterski verbunden ist und mittels eines hinteren Drehpunkts mit der hinteren Gabel verbunden ist.

6. Skigerät nach einem oder mehreren der vorhergehenden Ansprüche, **dadurch gekennzeichnet, dass** die Skier eine Taillierung aufweisen.

7. Skigerät nach einem oder mehreren der vorhergehenden Ansprüche, **dadurch gekennzeichnet, dass** es am Hinterski ein Bremselement umfasst.

8. Skigerät nach Anspruch 7, **dadurch gekennzeichnet, dass** das Bremselement zwei sich hin und her bewegende Bremsen umfasst, welche an einer Buchse drehbar sind, welche fest mit einer Platte zur Befestigung des hinteren Befestigungsarms verbunden ist,
ein fester Stützhebel, der fest mit der Buchse verbunden ist, für die Ummantelung eines zu einem am Lenker angeordneten Bremshebel zugehörigen Kabels,
weiterhin bereitstellend ein Querelement, welches mit den beiden Bremselementen verbunden ist, und
ein elastisches Element, das zwischen dem Stützhebel und dem Querelement agiert und so ausgestaltet ist, um die Bremselemente in einer gehobenen Lage zu halten.

9. Skigerät nach einem oder mehreren der vorhergehenden Ansprüche, **dadurch gekennzeichnet, dass** es einen Sattel umfasst, welcher lösbar mit dem Rahmen verbunden ist.

10. Skigerät nach einem oder mehreren der vorhergehenden Ansprüche, **dadurch gekennzeichnet, dass** es ein Vorderrad und ein Hinterrad umfasst, welche so angeordnet werden können, um den Vorderski und den Hinterski zu ersetzen.

11. Skigerät nach einem oder mehreren der vorhergehenden Ansprüche, **dadurch gekennzeichnet, dass** es einen Stoßdämpfer umfasst, welcher in die Lenksäule eingeschoben ist.

## Revendications

1. Équipement de ski (1) possédant une structure simplifiée, comprenant un cadre allongé (2) qui forme, dans une partie centrale, des supports (3) pour les pieds d'un utilisateur et, à l'extrémité avant, un tube de direction (4) destiné à entrer en prise rotative avec une colonne de direction (10), un ski avant (13) relié à l'extrémité inférieure de ladite colonne (10) et un ski arrière (21) relié à l'extrémité arrière dudit cadre (2) étant en outre prévus, lesdits skis étant reliés de sorte qu'ils puissent osciller autour d'axe sensiblement horizontaux, **caractérisé en ce que** lesdits supports (3) pour les pieds de l'utilisateur sont agencés dans une position centrale par rapport à l'extension longitudinale dudit cadre (2), ledit tube de direction (4) est incliné à un angle de 15 à 20° par rapport à la verticale, et **en ce que** ledit cadre (2) possède un centre de gravité bas.

2. Équipement de ski selon la revendication 1, **caractérisé en ce qu'**il comprend un guidon qui est relié à l'extrémité supérieure de ladite colonne.

3. Équipement de ski selon une ou plusieurs des revendications précédentes, **caractérisé en ce qu'**il comprend, au niveau dudit ski avant, un appui avant qui est articulé sur ladite colonne au moyen d'un pivot avant.

4. Équipement de ski selon une ou plusieurs des revendications précédentes, **caractérisé en ce qu'**il comprend, au niveau de l'extrémité arrière dudit cadre, une fourche arrière pour l'articulation dudit ski arrière.

5. Équipement de ski selon une ou plusieurs des revendications précédentes, **caractérisé en ce qu'**il comprend un appui arrière qui est associée audit ski arrière et est relié au moyen d'un pivot arrière à ladite fourche arrière.

6. Équipement de ski selon une ou plusieurs des revendications précédentes, **caractérisé en ce que** lesdits skis comportent un profil latéral central.

7. Équipement de ski selon une ou plusieurs des revendications précédentes, **caractérisé en ce qu'**il comprend un élément de freinage au niveau dudit ski arrière.

8. Équipement de ski selon la revendication 7, **caractérisé en ce que** ledit élément de freinage comprend deux freins oscillants qui pivotent au niveau d'une douille qui est accouplée de façon rigide avec une plaque pour la liaison dudit appui arrière, un levier de butée fixe pour la gaine d'un câble associé à un levier de frein agencé sur le guidon étant accouplé de façon rigide avec ladite douille, une traverse étant en outre prévue qui joint lesdits leviers de frein, des moyens élastiques agissant entre ledit levier de butée et ladite traverse et étant adaptés pour maintenir lesdits leviers de frein dans une position levée.

9. Équipement de ski selon une ou plusieurs des revendications précédentes, **caractérisé en ce qu'**il comprend une selle qui peut être accouplée de façon détachable avec ledit cadre.

10. Équipement de ski selon une ou plusieurs des revendications précédentes, **caractérisé en ce qu'**il comprend une roue avant et une roue arrière, qui peuvent être positionnées afin de remplacer lesdits skis avant et arrière

11. Équipement de ski selon une ou plusieurs des revendications précédentes, **caractérisé en ce qu'**il comprend un amortisseur de chocs qui est interposé sur ladite colonne de direction.
